(19) Europäisches Patentamt
European Patent Office
Office européen des brevets

(11) **EP 3 235 726 B1**

(12) **EUROPEAN PATENT SPECIFICATION**

(45) Date of publication and mention
of the grant of the patent:
**31.05.2023 Bulletin 2023/22**

(21) Application number: **17167579.6**

(22) Date of filing: **21.04.2017**

(51) International Patent Classification (IPC):
**B64D 13/06** *(2006.01)*     **F04D 25/04** *(2006.01)*
**F04D 25/06** *(2006.01)*     **F04D 25/08** *(2006.01)*
**F04D 29/42** *(2006.01)*     **F04D 29/44** *(2006.01)*
**F04D 29/46** *(2006.01)*     **F04D 29/68** *(2006.01)*
**F04D 29/28** *(2006.01)*     **F04D 29/30** *(2006.01)*

(52) Cooperative Patent Classification (CPC):
**B64D 13/06; F04D 25/04; F04D 25/06;
F04D 29/284; F04D 29/30; F04D 29/462;
F04D 29/682; F04D 29/684;** B64D 2013/0611;
B64D 2013/0644; F05D 2250/52; Y02T 50/50

(54) **ENVIRONMENTAL CONTROL SYSTEM UTILIZING ENHANCED COMPRESSOR**

KLIMAREGELUNGSSYSTEM MIT VERBESSERTEM VERDICHTER

SYSTÈME DE COMMANDE ENVIRONNEMENTAL UTILISANT UN COMPRESSEUR AMÉLIORÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.04.2016 US 201615136329**

(43) Date of publication of application:
**25.10.2017 Bulletin 2017/43**

(73) Proprietor: **Hamilton Sundstrand Corporation
Charlotte, NC 28217 (US)**

(72) Inventors:
• **BRUNO, Louis J.
Ellington, CT Connecticut 06029 (US)**
• **HIPSKY, Harold W.
Willington, CT Connecticut 06279 (US)**

(74) Representative: **Dehns
St. Bride's House
10 Salisbury Square
London EC4Y 8JD (GB)**

(56) References cited:
EP-A1- 2 937 287     EP-A2- 1 640 673
US-A- 4 981 018     US-A1- 2006 088 412
US-A1- 2008 038 114     US-A1- 2012 156 027
US-A1- 2014 314 590     US-B2- 7 970 497

## Description

### BACKGROUND

In general, with respect to present air conditioning systems of aircraft, cabin pressurization and cooling is powered by engine bleed pressures at cruise. For example, pressurized air from an engine of the aircraft is provided to a cabin through a series of systems that alter the temperatures and pressures of the pressurized air. To power this preparation of the pressurized air, the only source of energy is the pressure of the air itself. As a result, the present air conditioning systems have always required relatively high pressures at cruise. Unfortunately, in view of an overarching trend in the aerospace industry towards more efficient aircraft, the relatively high pressures provide limited efficiency with respect to engine fuel burn. Air compressors are known from US 7,970,497 and US 2006/088412. EP 2 937 287 A1 discloses an air conditioning system for an aircraft comprising an air cycle machine comprising a compressor with a rotor and a mixed flow channel, a turbine downstream of the compressor and an electric motor coupled to the compressor; and at least one heat exchanger.

### BRIEF DESCRIPTION

According to the invention, an air conditioning system for an aircraft is provided as defined by claim 1.

Additional features and advantages are realized through the techniques of the embodiments herein. Other embodiments and aspects are described in detail herein.

For a better understanding of the advantages and the features, refer to the description and to the drawings.

### BRIEF DESCRIPTION OF THE DRAWINGS

The subject matter is particularly pointed out and distinctly claimed in the claims at the conclusion of the specification. The forgoing and other features, and advantages thereof are apparent from the following detailed description taken in conjunction with the accompanying drawings in which:

FIG. 1 is a diagram of a schematic of an environmental control system according to an example not according to claim 1;

FIG. 2 is operation example of an environmental control system according to an embodiment;

FIG. 3 is a collapsed compressor map;

FIG. 4 is a diagram of two schematics of a compressor rotor, one having no backsweep not according to claim 1 and the other having backsweep according to claim 1.

FIG. 5 illustrates a shroud bleed placement diagram according to an embodiment;

FIG. 6 is a collapsed compressor map of an enhanced compressor that has a high rotor backsweep with shroud bleed and a low solidity diffuser according to an embodiment;

FIG. 7 is a diagram of schematics of a mixed flow channel according to an embodiment;

FIG. 8 is a collapsed compressor map of a compressor with a mixed flow channel according to an embodiment;

FIG. 9 is a diagram of schematics of diffusers of a compressing device according to an embodiment; and

FIG. 10 is a collapsed compressor map of an enhanced compressor that utilizes a variable vaned diffuser according to an embodiment.

### DETAILED DESCRIPTION

A detailed description of one or more embodiments of the disclosed apparatus and method are presented herein by way of exemplification and not limitation with reference to the FIGS.

Embodiments herein provide an environmental control system that utilizes bleed pressures to power the environmental control system and to provide cabin pressurization and cooling at a high engine fuel burn efficiency, along with including an enhanced compressor that has high efficiency over a much wider corrected flow and pressure ratio range. The enhanced compressor is as defined by claim 1 and can be as defined by claims 2-4.

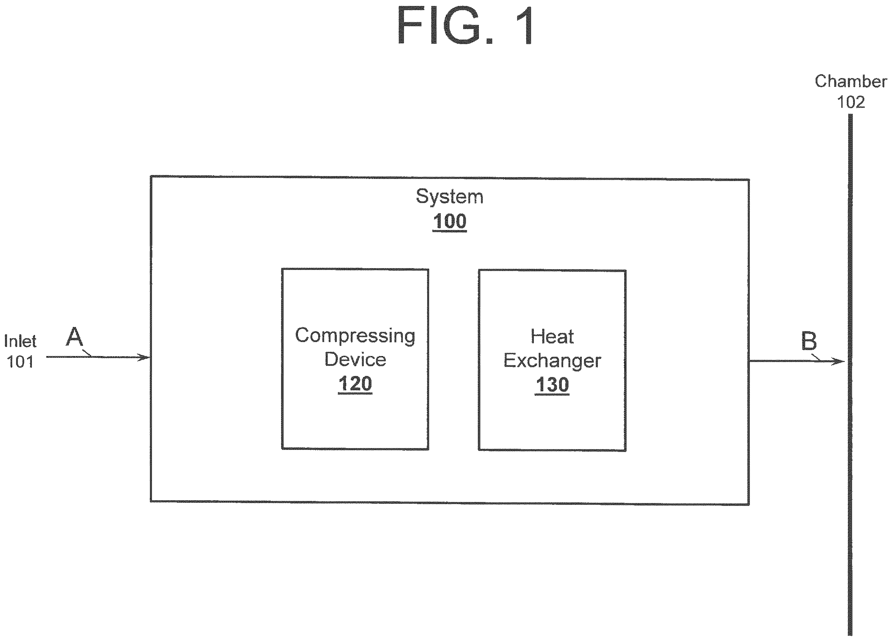

In general, examples not according to claim 1 of the environmental control system may include one or more heat exchangers and a compressing device. A medium, bled from a low-pressure location of an engine, flows through the one or more heat exchangers into a chamber. Turning now to FIG. 1, a system 100 that receives a medium from an inlet 101 and provides a conditioned form of the medium to a chamber 102 is illustrated. The system 100 comprises a compressing device 120 and a heat exchanger 130. The elements of the system are connected via valves, tubes, pipes, and the like. Valves are devices that regulate, direct, and/or control a flow of a medium by opening, closing, or partially obstructing various passageways within the tubes, pipes, etc. of the system 100. Valves can be operated by actuators, such that flow rates of the medium in any portion of the system 100 can be regulated to a desired value.

As shown in FIG. 1, a medium can flow from an inlet 101 through the system 100 to a chamber 102, as indicated by solid-lined arrows A, B. In the system 100, the medium can flow through the compressing device 120, through the heat exchanger 130, from the compressing device 120 to the heat exchanger 130, from the heat exchanger 130 to the compressing device 120, etc.

The medium, in general, can be air, while other examples include gases, liquids, fluidized solids, or slurries. When the medium is being provided by an engine connected to the system 100, such as from the inlet 101, the medium can be referred to herein as bleed air (e.g., outside air or fresh air). With respect to bleed air, a low-pressure location of the engine (or an auxiliary power unit) can be utilized to provide the medium at an initial pressure level near a pressure of the medium once it is in the chamber 102 (e.g., chamber pressure).

For instance, with respect to an aircraft example, air can be supplied to the environmental control system by being "bled" from a compressor stage of a turbine engine. The temperature, humidity, and pressure of this bleed air varies widely depending upon a compressor stage and a revolutions per minute of the turbine engine. Since a low-pressure location of the engine is utilized, the medium may be slightly above or slightly below the pressure in the chamber 102. Bleeding the medium at such a low pressure from the low-pressure location causes less of a fuel burn than bleeding air from a higher pressure location. Yet, because the medium is starting at this relatively low initial pressure level and because a drop in pressure occurs over the one or more heat exchangers, the medium will drop below the chamber pressure while the medium is flowing through the heat exchanger 130. When the pressure of the medium is below the chamber pressure, the medium will not flow into the chamber to provide pressurization and temperature conditioning.

To achieve the desired pressure, the bleed-air can be compressed as it is passed through the compressing device 120. The compressing device 120 is a mechanical device that controls and manipulates the medium (e.g., increasing the pressure of bleed air). Examples of the compressing device 120 include an air cycle machine, a three-wheel machine, a four wheel-machine, etc. The compressing device 120 can include a compressor, such as centrifugal, diagonal or mixed-flow, axial-flow, reciprocating, ionic liquid piston, rotary screw, rotary vane, scroll, diaphragm, and air bubble compressors. Compressors can be driven by a motor or the medium (e.g., bleed air, chamber discharge air, and/or recirculation air) via a turbine. The compressor of the compressing device can be an enhanced compressor as further described below.

The heat exchanger 130 is a device built for efficient heat transfer from one medium to another. Examples of heat exchangers include double pipe, shell and tube, plate, plate and shell, adiabatic wheel, plate fin, pillow plate, and fluid heat exchangers. In an embodiment, air forced by a fan (e.g., via push or pull methods) can be blown across the heat exchanger at a variable cooling airflow to control a final air temperature of the bleed air.

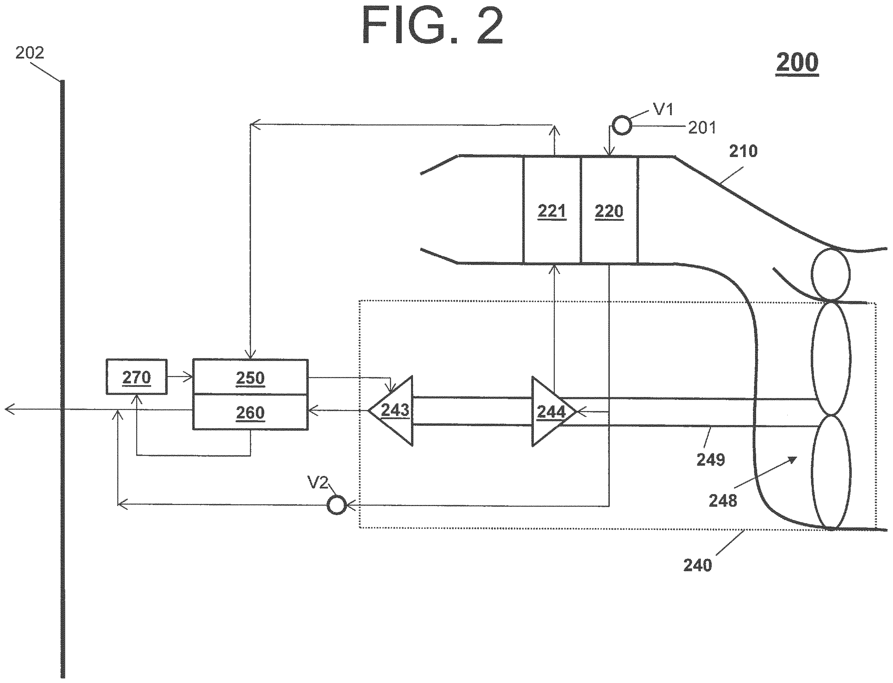

The system 100 of FIG. 1 will now be described with reference to FIG. 2, in view of the aircraft example. FIG. 2 depicts a schematic of a system 200 (e.g., an embodiment of system 100) as it could be installed on an aircraft.

The system 200 is an example of an environmental control system of an aircraft that provides air supply, thermal control, and cabin pressurization for the crew and passengers of the aircraft. The system 200 can be bleed air driven that receives a bleed pressure between 310.264 kPa (45 psia) on the ground and 208.842 kPa (30 psia) in cruise. The system 200 can also be bleed air driven that receives a bleed pressure at or near cabin pressure (e.g., work with bleed pressures near a chamber pressure during cruise). The cold dry air is used to cool the cabin, flight deck and other airplane systems.

The system 200 illustrates bleed air flowing in at inlet 201 (e.g., off an engine of an aircraft or auxiliary power unit at an initial flow rate, pressure, temperature, and humidity), which in turn is provided to a chamber 202 (e.g., cabin, flight deck, etc.) at a final flow rate, pressure, temperature, and humidity. The bleed air can also take an alternate path back through the system 200 to drive and/or assist the system 200. The system 200 includes a shell 210 for receiving and directing ram air through the system 200. Note that based on the embodiment, an exhaust from the system 200 can be sent to an outlet (e.g., releases to ambient air through the shell 210).

The system 200 further illustrates valves V1-V2, heat exchangers 220, 221, an air cycle machine 240 (that includes a turbine 243, an enhanced compressor 244, a fan 248, and a shaft 249), a reheater 250, a condenser 260, and a water extractor 270, each of which is connected via tubes, pipes, and the like. Note that the heat exchangers 220, 221 are examples of the heat exchanger 130 as described above. Further, in an embodiment, the heat exchanger 221 is a secondary heat exchanger where the primary heat exchanger is the heat exchanger 220. Note also that the air cycle machine 240 is an example of the compressing device 120 as described above.

The air cycle machine 240 controls/regulates a temperature, a humidity, and a pressure of a medium (e.g., increasing the pressure of a bleed air). The enhanced compressor 244 is a mechanical device that raises the pressure of the bleed-air received from the first heat exchanger. The turbine 243 is a mechanical device that drives the enhanced compressor 244 and the fan 248 via the shaft 249. The fan 248 is a mechanical device that can force via push or pull methods air through the shell 210 across the secondary heat exchanger 220 at a variable cooling airflow. Thus, the turbine 243, the enhanced compressor 244, and the fan 248 together illustrate, for example, that the air cycle machine 240 may operate as a three-wheel air cycle machine.

The reheater 250 and the condenser 260 are particular types of heat exchanger. The water extractor 270 is a mechanical device that performs a process of taking water from any source, such as the medium (e.g., bleed-air). Together, the reheater 250, the condenser 260, and/or the water extractor 270 can combine to be a high pressure water separator.

In operation, bleed air from the inlet 201 via the valve V1 enters the primary heat exchanger 220 and is cooled by ram air to produce cooler air. This cooler air then enters the enhanced compressor 244 of the air cycle machine 240. The enhanced compressor 244 further pressurizes the cooler air and in the process heats it. This pressurized, heated air then enters the secondary heat exchanger 221, where it is again cooled by ram air to approximately ambient temperature to produce cooled air. This cooled air enters the high pressure water separator. In the high pressure water separator, the cooled air goes through the reheater 250, where it is cooled; the condenser 260, where it is cooled by air from the turbine 243; the water extractor 270, where moisture is removed; and the reheater 250, where it is heated back to nearly the same temperature it started at when it entered the high pressure water separator. The air exiting the high pressure water separator is now dry air and enters the turbine 243, where it is expanded and work is extracted. This work drives the enhanced compressor 244 and/or the fan 248 that is used to pull a ram air flow through the primary and secondary heat exchangers 220, 221. After leaving the turbine 243, the air, which can be below freezing, cools the air in the condenser 260.

In view of the above, it should be noted that the enhanced compressor is volumetric flow device and that corrected flow is the term used to define the inlet conditions of the enhanced compressor 244. Further, the corrected flow is defined by:

$$Wc = W\sqrt{\theta}/\partial \qquad \text{Equation 1,}$$

where $Wc$ is the corrected flow, $W$ is flow prior to correction, $\theta = \dfrac{Tin}{519}$ where T is an inlet temperature, and $\partial = \dfrac{Pin}{14.7}$ where P is an inlet pressure. Note that the inlet temperature is in Rankine and the inlet pressure is in Psi. In accordance with Equation 1, there is therefore a strong relationship between compressor flow and compressor inlet pressure.

In the system 200, the enhanced compressor 244 is designed to work efficiently over a narrow inlet pressure range nominally 1.5 to 1. To compensate for the lower inlet pressure, a portion of the air bypasses the enhanced compressor 244. This has the effect of narrowing the compressor corrected flow range to 1.1 to 1. The valve V2 position is controlled such that the requirement for cabin flow (e.g., chamber flow 202) is met. In operation, when the inlet pressure to the enhanced compressor 244 in insufficient to have all of the required cabin flow go through then the air cycle machine 240, a controller will open the valve V2. The valve V2 is positioned such that the combination of air going through the compressor and the valve V2 meets the required flow.

In some contemporary environmental control systems, an electrical motor is used to drive a compressor to boost the pressure when a bleed pressure entering a pressurization circuit is less than that of a cabin pressure (e.g., as much as 34.473 kPa (5 psi) below cabin pressure). In other contemporary environmental control systems, the air cycle machine can include an additional electrical motor driven compressor to boost the pressure under the same conditions. Yet, in these contemporary environmental control systems, what is not addressed is how a compressor works efficiently in the pressurization circuit that receives approximately 101.352 kPa (14.7 psia) on the ground and as little as 46.884 kPa (6.8 psia) in flight.

For example, in a contemporary environmental control system of an aircraft, a pressurization circuit may use a low pressure bleed from an aircraft engine and a cooling circuit may reject heat and water from air outside a cabin of the aircraft. An air cycle machine of the contemporary environmental control system may be motorized (i.e., driven by a motor). Upon reduction of engine bleed air pressure due to altitude or power setting, the motor is used to power a conventional compressor of the air cycle machine to provide pressurization for the cabin. Yet, when there is insufficient pressure to pressurize the cabin (for example, the pressurization circuit receives approximately 101.352 kPa (14.7 psia) on the ground and 46.884 kPa (6.8 psia) in flight) or insufficient cooling, the conventional compressor of the air cycle machine is too inefficient to provide pressurization and expansion cooling despite the motor.

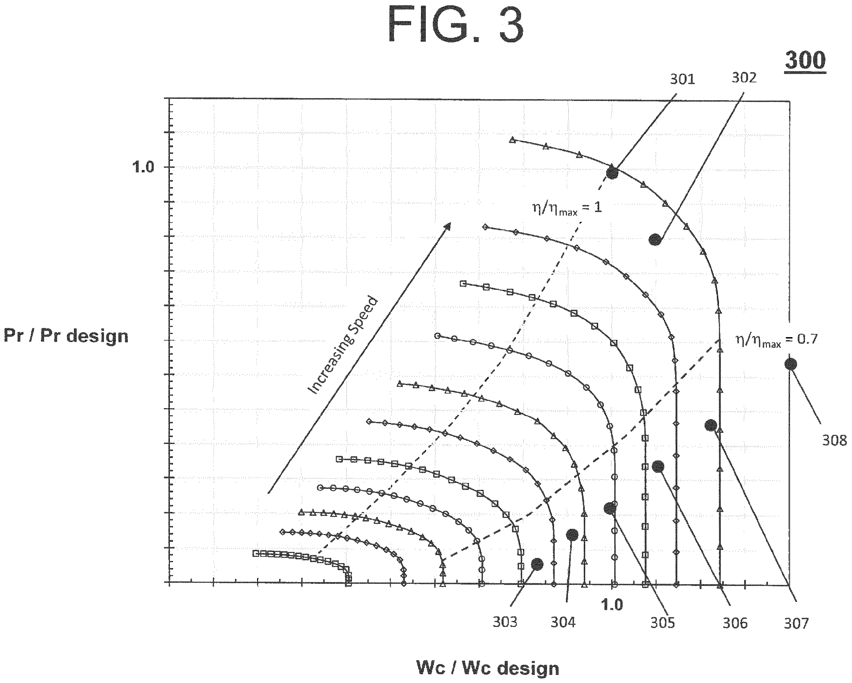

Turning now to FIG. 3, a collapsed compressor map 300 is shown. The collapsed compressor map 300 includes an x-axis related to compressor corrected flow and a y-axis related to a compressor pressure ratio. Further, FIG. 3 shows a plurality of points 301-308 plotted on the collapsed compressor map 300. The point 301 represents a ground condition. The point 302 represents a flight condition. As shown in FIG. 3, the points 301 and 302 are reasonably close together and both have very high efficiency. This is because the corrected flow range is very narrow approximately 1.1 to 1. The points 303-308 represent cruise conditions at various inlet pressures (utilizing low pressure bleed air) of the contemporary environmental control system. For instance, the point 303 represents a pressure at an inlet of the conventional compressor that is just below cabin pressure, and the point 308 represents a pressure that is 27.58 kPa (4 psi) below cabin pressure. Note that the combination of flow range and pressure ratio results in compressor efficiencies that are below $\eta/\eta_{max} = 0.7$. That is, the conventional compressor of the air cycle machine in the contemporary environmental control system would require a corrected compressor inlet flow range of more than 2:1 (nearly a 2.5 to 1 pressure range) to properly pressurize the noted insufficient pressure. Such a high corrected compressor inlet flow range results in compressor efficiencies that are below 50%. Alternatively, for the cases that are more than 13,8 kPa (2 psi) below cabin pressure, a greater than 50% compressor efficiency would require a larger motor, larger ram air heat exchangers, increased system weight, increased ram air drag, etc.

In view of the above and in contrast to the conventional compressor and the resulting corrected flow range of 2.5 to 1 of the contemporary environmental control systems, the system 200 (and embodiments thereof) provides the enhanced air cycle machine 240 with the enhanced compressor 244 that has high efficiency over a much wider corrected flow and pressure ratio range, such as a corrected flow range of 1.1 to 1. The enhanced compressor 244 is as defined by claim 1 and can be as defined by claims 2-4.

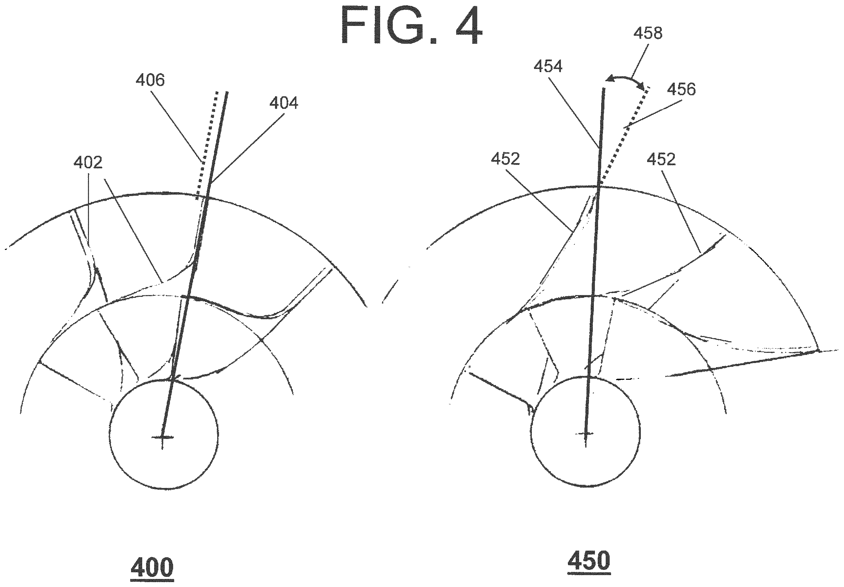

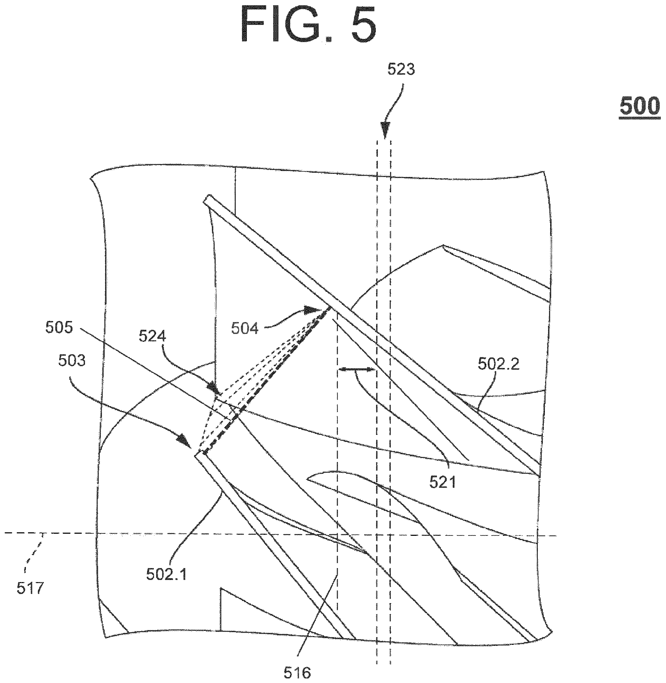

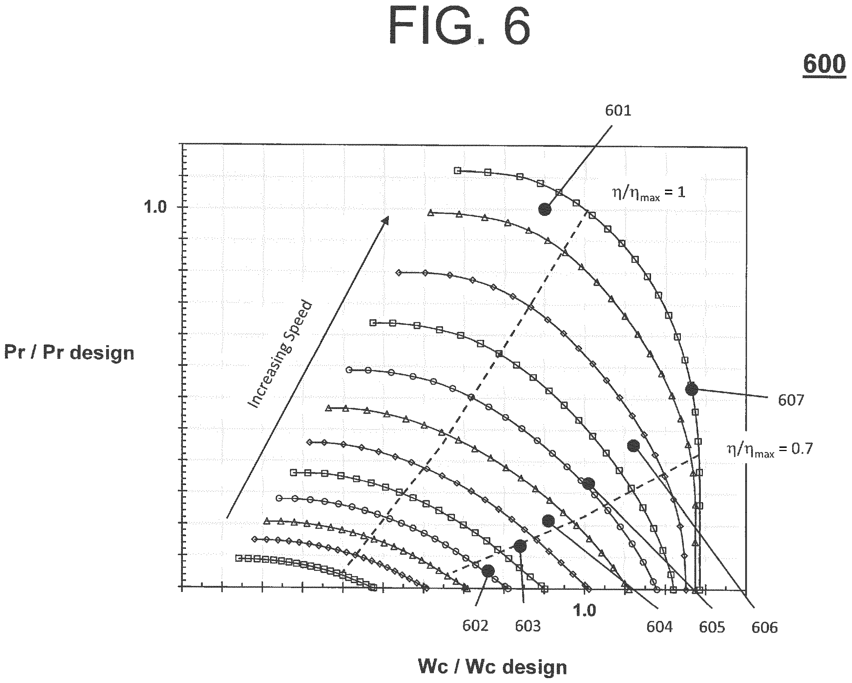

Turning now to FIGS. 4-10, the enhanced compressor 244 will now be described. With regard to FIGS. 4-6, the enhanced compressor 244 comprising a high rotor backsweep with shroud bleed and a low solidity diffuser is described. That is, FIG. 4 is a diagram of two schematics of a compressor rotor, one having no backsweep not according to claim 1 and the other having backsweep according to claim 1; FIG. 5 illustrates a shroud bleed placement diagram according to an embodiment; and FIG. 6 is a collapsed compressor map of the enhanced compressor 244 that has a high rotor backsweep with shroud bleed and a low solidity diffuser according to an embodiment.

FIG. 4 illustrates a rotor 400 not according to claim 1 with a plurality of blades 402. As illustrated, a reference line 404 extends radially from a center of the rotor 400. A dotted-line 406 tracks a direction of the rotor blade 402, if the rotor blade 402 were to be extended from a circumferential edge of the rotor 400. As shown, the direction of the rotor blade 402 (e.g., dotted-line 406) is in parallel with the reference line 404, which indicates no rotor backsweep.

FIG. 4 also illustrates a rotor 450, with a plurality of blades 452, according to an embodiment. As illustrated, a reference line 454 extends radially from a center of the rotor 450. A dotted-line 456 tracks a direction of the rotor blade 452, if the rotor blade 452 were to be extended from a circumferential edge of the rotor 450. As shown, the direction of the rotor blade 452 (e.g., dotted-line 456) is not in parallel with the reference line 454, which indicates a rotor backsweep. The rotor backsweep is defined by an angle 458. The backsweep angle is one of 30°, 42°, 45°, and 52°.

FIG. 5 illustrates a shroud bleed placement diagram 500, which includes a plurality of demarcations and lines overlaying a greyed-out view of a portion of a rotor, according to an embodiment. As shown, rotor blades or impeller blades 502 (e.g., impeller blades 502.1 and 502.2) bound a flow path. From a shroud tip 503 of the impeller blade 502.1 (i.e., an impeller blade leading edge) to a shroud suction surface 504 of the impeller blade 502.2 a throat 505 of the flow path is formed. At a location where the throat 505 contacts the shroud suction surface 504 of the impeller blade 502.2, a plane 516 is formed. The plane 516 is perpendicular to an axis of rotation 517 of the rotor itself. The plane 516 can be utilized to offset 521 a shroud bleed 523. In an embodiment, the offset 521 can be selected from a range, such as a range from 0 to 22.86 mm (0 to 0.90 inches).

The shroud bleed 523 can be an opening for allowing a portion of a medium in the flow path to bleed out of or into the flow path instead of exiting the rotor. The shroud bleed 523 can be a circumferentially located on a housing of the rotor. The shroud bleed 523 can comprise one or more openings, each of which can be segmented at fixed or varying intervals, lengths, and/or patterns, to accommodate different bleed rates. The shroud bleed 523 can be holes, slots, cuts, etc. The shroud bleed 523 can be defined by an area, such as a total open area that is a percentage, e.g., 0 to 50% of a total rotor inlet throat area 524. The total rotor inlet throat area 524 is defined by the area 524 between each pair of impeller blades 502.

As illustrated in FIG. 6, a collapsed compressor map 600 of the enhanced compressor 244 comprising a high rotor backsweep with a shroud bleed is shown according to an embodiment. The enhanced compressor 244 can also include a low solidity diffuser. The collapsed compressor map 600 includes an x-axis related to a compressor corrected flow and a y-axis related to a compressor pressure ratio. Further, FIG. 6 shows a plurality of points 601-607 plotted on the collapsed compressor map 600. The point 601 represents a ground condition. The points 602-607 represent cruise conditions at various inlet pressures (utilizing low pressure bleed air) of the system 200. The point 602 represents a pressure that is just below cabin pressure. The point 607 represents a pressure at the inlet 201 that is 4 psi below cabin pressure. Note that the combination of flow range and pressure ratio show compressor efficiencies that are trending above $\eta/\eta_{max} = 0.7$ due to the differences between the enhanced compressor 244 and the conventional compressor. That is, the enhanced compressor 244 comprising the high rotor backsweep with the shroud bleed (and the low solidity diffuser) has a much wider flow range and, therefore, operates at conditions above $\eta/\eta_{max} = 0.7$, which are significantly higher than the conventional compressor without these features.

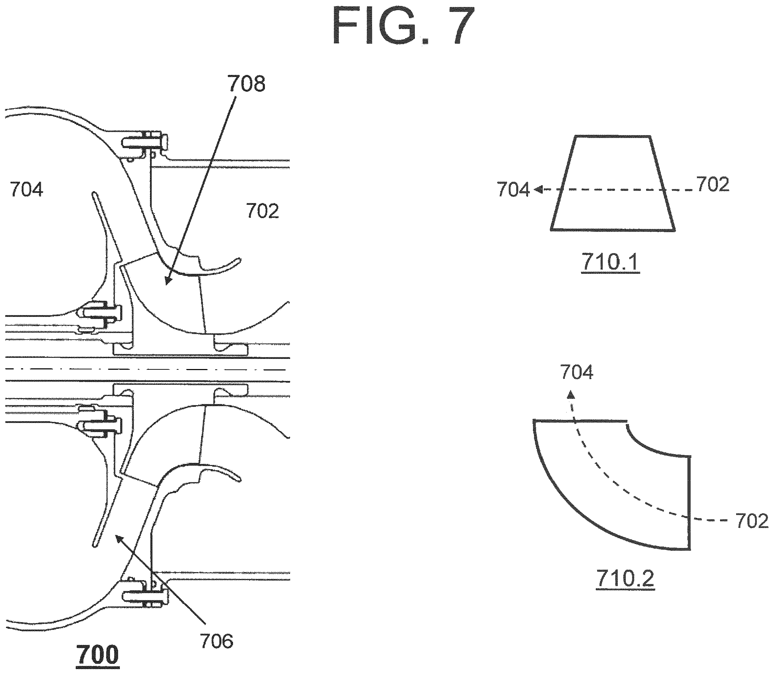

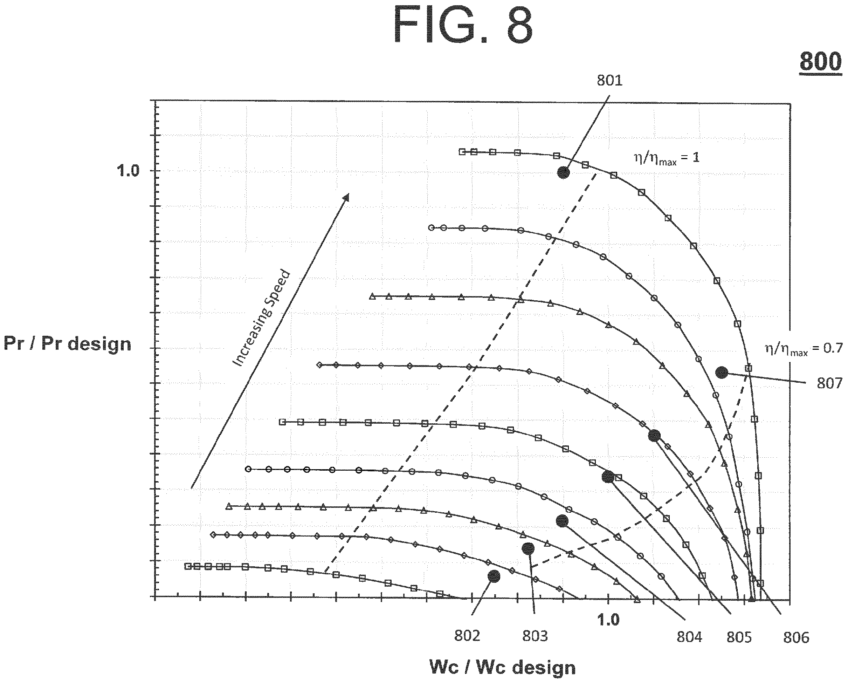

Turning now to FIG. 7-8, a compressor that has a mixed flow channel will now be described. FIG. 7 is a diagram of schematics of a mixed flow channel according to an embodiment; and FIG. 8 is a collapsed compressor map of a compressor with a mixed flow channel according to an embodiment.

FIG. 7 illustrates a cross section view 700 of the enhanced compressor 244. As shown in the cross section view 700, the enhanced compressor 244 comprises an inlet 702 and an outlet 704, which define a flow path. That is, the flow path between the inlet 702 and the outlet 704 is a mixed flow channel. The mixed flow channel can house a diffuser at position 706 and a rotor at position 708. A shape of the mixed flow channel can be selected to be between a range of a channel 710.1 to a channel 710.2. For instance, the channel 710.1 comprises a straight flow path, such that a flow of a medium through the channel 710.1 is parallel to an axis of rotation of the rotor. Further, the channel 710.2 comprises a bent flow path, such that the flow of the medium through the channel 710.2 begins at inlet 702 in parallel with the axis of rotation of the rotor and ends at outlet 704 perpendicular to the axis of rotation of the rotor.

As illustrated in FIG. 8, a collapsed compressor map 800 of the enhanced compressor 244 with a mixed flow channel is shown according to an embodiment. The collapsed compressor map 800 includes an x-axis related to a compressor corrected flow and a y-axis related to a compressor pressure ratio. Further, FIG. 8 shows a plurality of points 801-807 plotted on the collapsed compressor map 800. The point 801 represents a ground condition. The points 802-807 represent cruise conditions at various inlet pressures (utilizing low pressure bleed air) of the system 200. The point 802 represents a pressure that is just below cabin pressure. The point 807 represents a pressure at the inlet 201 that is 4 psi below cabin pressure. Note that the combination of flow range and pressure ratio show compressor efficiencies that are above $\eta/\eta_{max} = 0.7$ due to the differences between the enhanced compressor 244 and the conventional compressor. That is, the enhanced compressor 244 comprising the mixed flow channel operates over a wide flow range with great efficiency and, therefore, operates at conditions above $\eta/\eta_{max} = 0.7$, which are significantly higher than the conventional compressor without this feature.

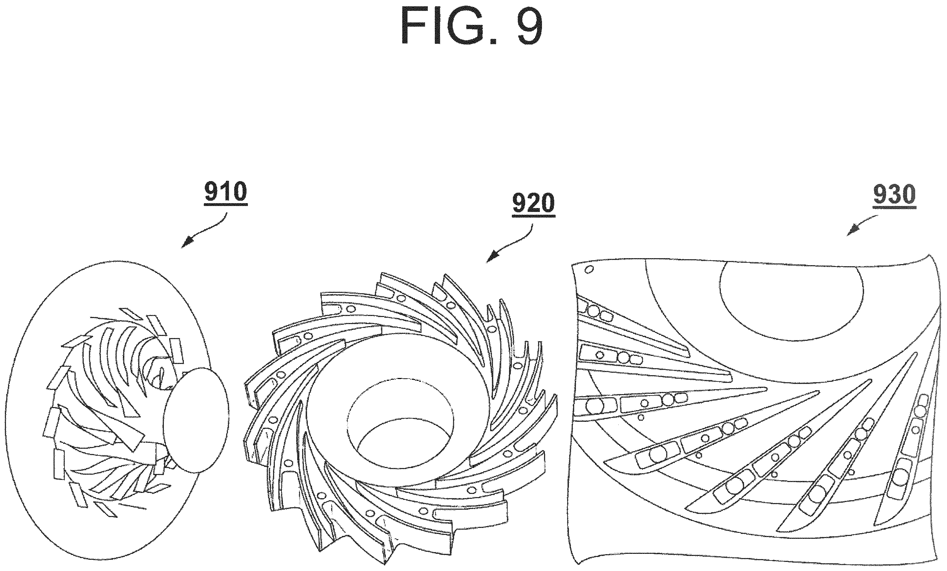

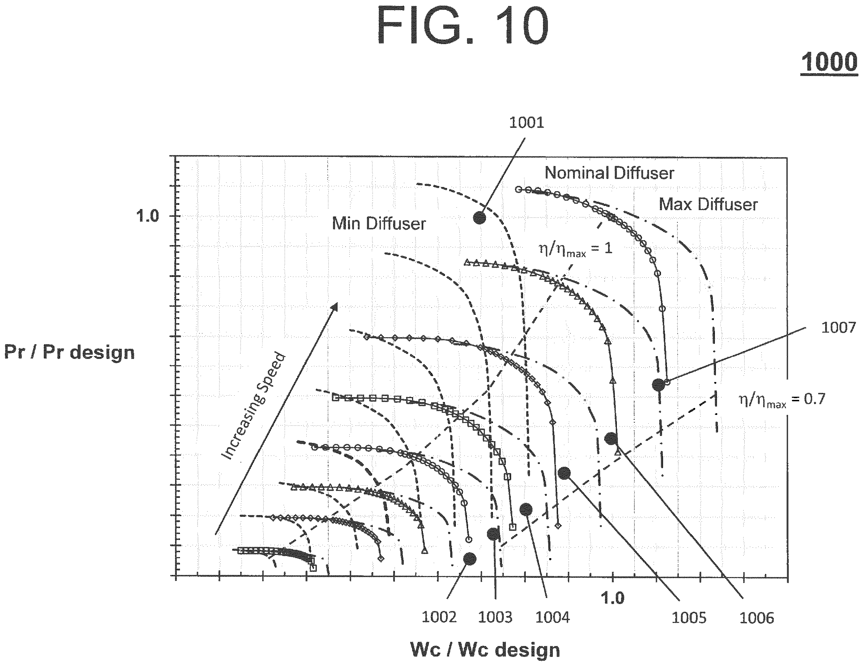

Turning now to FIGS. 9-10, the enhanced compressor 244 that utilizes a variable vaned diffuser will now be described. FIG. 9 is a diagram of schematics of diffusers of a compressing device according to an embodiment; and FIG. 10 illustrates a plot of efficiency vs. flow for a compressor that utilizes a variable vaned diffuser according to an embodiment.

FIG. 9 illustrates a plurality of diffusers, a schematic 910 of a low solidity diffuser, a schematic 920 of a curved channel diffuser, and a schematic 930 of a variable vaned diffuser. A diffuser converts the dynamic pressure of the medium flowing downstream of the rotor into static pressure rise by gradually slowing/diffusing a velocity of the medium (e.g., increases static pressure leaving the rotor). The diffuser can be vaneless, vaned or an alternating combination. As different diffuser types impact range and efficiency of the enhanced compressor 244 of the air cycle machine 240, one these diffusers 910, 920, and 930 can be utilized within the enhanced compressor 244 (e.g., at position 706). The low solidity diffuser has a smaller number of vanes and exhibits a wide operating range with a slightly reduced efficiency. The curved channel diffuser extends arches each of the vanes and exhibits a narrow operating range with a high efficiency. The variable vaned diffuser comprises a plurality of vanes, each of which is configured to rotate about a pin as an articulating member moves the plurality of vanes, and includes a very high operating range with a high efficiency. Further, a single diffuser that has a combination of two or more of the diffusers 910, 920, and 930 can also be utilized.

As illustrated in FIG. 10, a collapsed compressor map 1000 of a compressor that utilizes a variable vaned diffuser is shown according to an embodiment. The collapsed compressor map 1000 includes an x-axis related to compressor corrected flow and a y-axis related to a compressor pressure ratio. Further, FIG. 10 shows a plurality of points 1001-1007 plotted on the collapsed compressor map 1000. The point 1001 represents a ground operating condition. The points 1002-1007 represent cruise conditions at various inlet pressures (utilizing low pressure bleed air) of the system 200. The point 1002 represents a pressure that is just below cabin pressure. The point 1007 represents a pressure at the inlet 201 that is 4 psi below cabin pressure. Note that the combination of flow range and pressure ratio show compressor efficiencies that are above $\eta/\eta_{max} = 0.7$ due to the differences between the enhanced compressor 244 and the conventional compressor. That is, the enhanced compressor 244 comprising the variable vaned operates over very high efficiency and a very wide operating range and, therefore, operates at conditions above $\eta/\eta_{max} = 0.7$, which are significantly higher than the conventional compressor without this feature.

In view of the above, embodiments herein can include a hybrid electric and bleed system for a vehicle or pressure vessel. The hybrid electric and bleed system can comprise an environmental control system having a pressurization circuit and a cooling circuit. The pressurization circuit provides air near cabin pressure. The cooling circuit rejects heat and water from air outside the pressure vessel. The environmental control system can be configured to be powered by mechanical power from pressurized bleed air and/or by electrical power through an electric motor. The environmental control system can include a compressor mechanically attached to a turbine, where the compressor has high rotor backsweep with shroud bleed and a low solidity diffuser, utilizes a variable vaned diffuser, and/or utilizes a mixed flow compressor.

Aspects of the embodiments are described herein with reference to flowchart illustrations, schematics, and/or block diagrams of methods, apparatus, and/or systems according to embodiments. Further, the descriptions of the various embodiments have been presented for purposes of illustration, but are not intended to be exhaustive or limited to the embodiments disclosed. Many modifications and variations will be apparent to those of ordinary skill in the art without departing from the scope of the invention as defined by the claims . The terminology used herein was chosen to best explain the principles of the embodiments, the practical application or technical improvement over technologies found in the marketplace, or to enable others of ordinary skill in the art to understand the embodiments disclosed herein.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

The flow diagrams depicted herein are just one example. There may be many variations to this diagram or the steps (or operations) described therein without departing from the scope of the invention as defined by the appended claims.

While the preferred embodiment has been described, it will be understood that those skilled in the art, both now and in the future, may make various improvements and enhancements which fall within the scope of the claims which follow.

**Claims**

1. An air conditioning system for an aircraft, comprising:
   an air cycle machine (240) comprising:

   a compressor (244) comprising a rotor, a diffuser (910, 920, 930), and a mixed flow channel, the rotor comprising a backsweep and a shroud bleed (523), the mixed flow channel housing the diffuser and the rotor, the diffuser being on an exit path of the rotor,
   a turbine (243) downstream of the compressor (244), and
   an electric motor coupled to the turbine (243) and the compressor (244); and
   at least one heat exchanger (220, 221),
   wherein the backsweep is defined by a backsweep angle of one of 30°, 42°, 45°, and 52°.

2. The system of claim 1, wherein the diffuser is a low solidity diffuser (910).

3. The system of claim 1, wherein the diffuser is a variable vaned diffuser (930).

4. The system of claim 1, wherein the diffuser is a curved channel diffuser (920).

**Patentansprüche**

1. Klimaanlagensystem für ein Luftfahrzeug, umfassend:
   eine Luftkreislaufmaschine (240), umfassend:

   einen Verdichter (244), der einen Rotor, einen Diffusor (910, 920, 930) und einen Mischströmungskanal umfasst, wobei der Rotor eine Kröpfung und eine Scheibenentlüftung (523) umfasst, wobei der Mischströmungskanal den Diffusor und den Rotor aufnimmt, wobei sich der Diffusor auf einem Austrittspfad des Rotors befindet,
einen Turbine (243) stromabwärts des Verdichters (244) und
einen Elektromotor, der an die Turbine (243) und den Verdichter (244) gekoppelt ist; und
mindestens einen Wärmetauscher (220, 221), wobei die Kröpfung durch einen Kröpfungswinkel von 30°, 42°, 45° und 52° definiert ist.

2. System nach Anspruch 1, wobei der Diffusor ein Diffusor (910) mit geringer Festigkeit ist.

3. System nach Anspruch 1, wobei der Diffusor ein Diffusor (930) mit variablen Schaufeln ist.

4. System nach Anspruch 1, wobei der Diffusor ein gekrümmter Kanaldiffusor (920) ist.

**Revendications**

1. Système de conditionnement d'air pour un aéronef, comprenant :
   un groupe turbo-refroidisseur (240) comprenant :

   un compresseur (244) comprenant un rotor, un diffuseur (910, 920, 930) et un canal d'écoulement mixte, le rotor comprenant un balayage arrière et une purge de carénage (523), le canal d'écoulement mixte logeant le diffuseur et le rotor, le diffuseur se trouvant sur une voie de sortie du rotor,
   une turbine (243) en aval du compresseur (244), et
   un moteur électrique couplé à la turbine (243) et au compresseur (244) ; et
   au moins un échangeur de chaleur (220, 221), dans lequel le balayage arrière est défini par un angle de balayage arrière de l'un parmi 30°, 42°, 45° et 52°.

2. Système selon la revendication 1, dans lequel le diffuseur est un diffuseur à faible solidité (910).

3. Système selon la revendication 1, dans lequel le diffuseur est un diffuseur à aubes variables (930).

4. Système selon la revendication 1, dans lequel le diffuseur est un diffuseur à canal incurvé (920).

# FIG. 1

EP 3 235 726 B1

FIG. 2

200

FIG. 4

FIG. 5

500

# FIG. 6

<u>600</u>

EP 3 235 726 B1

FIG. 7

# FIG. 8

<u>800</u>

$\eta/\eta_{max} = 0.7$

807

$\eta/\eta_{max} = 1$

801

806
805
804
803
802

1.0

Wc / Wc design

Increasing Speed

1.0

Pr / Pr design

# FIG. 9

EP 3 235 726 B1

# FIG. 10

**EP 3 235 726 B1**

**REFERENCES CITED IN THE DESCRIPTION**

**Patent documents cited in the description**

- US 7970497 B
- US 2006088412 A
- EP 2937287 A1